# EUROPEAN PATENT APPLICATION

(11) **EP 4 535 701 A1**
(43) Date of publication of application: **09.04.2025**
(21) Application number: 23815186.4
(22) Date of filing: 30.05.2023
(51) Int. Cl.: H04L 5/00, H04W 4/40, H04W 72/02

(54) **SIGNAL TRANSMISSION METHOD AND APPARATUS**

(30) Priority: 30.05.2022 CN 202210603113
(71) Applicant: Spreadtrum Semiconductor (Nanjing) Co., Ltd., Nanjing, Jiangsu 211899 (CN)
(72) Inventor: LEI, Zhenzhu, Nanjing, Jiangsu 211899 (CN)
(74) Representative: Mewburn Ellis LLP
(86) International application number: PCT/CN2023/097013
(87) International publication number: WO 2023/232007

(57) **Abstract**

The present disclosure provides a method and apparatus for signal transmission, to achieve sidelink reference signal transmission, thereby improving the resource utilization rate of a sidelink. The method includes: determining a candidate resource set for transmitting the reference signal according to reference-signal transmission resource information; determining at least one unoccupied candidate resource in the candidate resource set within a resource sensing window; and transmitting the reference signal on *N* candidate resources in the at least one candidate resource within the resource selection window, where *N* is a positive integer greater than or equal to 1.

## Description

### CROSS-REFERENCE TO RELATED APPLICATION(S)

This application claims priority to Chinese Patent Application No. 202210603113.5, entitled "SIGNAL TRANSMISSION METHOD AND APPARATUS", and filed on May 30, 2022 to the China National Intellectual Property Administration, the entire content of which is incorporated herein in its entirety by reference.

### TECHNICAL FIELD

The present disclosure relates to the technical field of communication, and in particular to a signal transmission method and an apparatus.

### BACKGROUND

In a cellular communication system, for a downlink positioning, a terminal device completes positioning measurement and reporting by measuring a positioning reference signal (PRS) transmitted by a transmission reception point (TRP). Each TRP is configured with a dedicated positioning resource, i.e., each TRP corresponds to one or more PRS resource sets. For uplink positioning, a network device configures a dedicated sounding reference signal (SRS) resource for the terminal device, and the terminal device transmits the SRS on a specific resource to achieve the uplink positioning.

Currently, the 3^{rd}-generation partnership project (3GPP) is studying a sidelink-based positioning, i.e., the terminal device may measure a sidelink to receive or transmit the positioning reference signal, thereby achieving the SL positioning. However, resources for the sidelink are relatively limited, and therefore, how to transmit the positioning reference signal on the sidelink is an urgent technical problem to be solved.

### SUMMARY

Embodiments of the present disclosure provide a signal transmission method and apparatus, so that a positioning reference signal may be transmitted on a sidelink, thereby improving the resource utilization rate of the sidelink.

In a first aspect, the present disclosure provides a signal transmission method. The method includes: determining a candidate resource set for transmitting the reference signal according to reference-signal transmission resource information; determining at least one unoccupied candidate resource in the candidate resource set within a resource sensing window; and transmitting the reference signal on *N* candidate resources in the at least one candidate resource within the resource selection window, where *N* is a positive integer greater than or equal to 1.

It can be seen that at least one unoccupied candidate resource in the candidate resource set is determined within the resource sensing window, so that a candidate resource for transmitting a reference signal is determined, thereby transmitting the reference signal. The reference signal may be a positioning reference signal, thereby transmitting the positioning reference signal on the sidelink and improving resource utilization of the sidelink.

In one possible implementation, the method further includes: receiving a positioning request, where the positioning request is used to request an SL positioning. The positioning request may come from other terminal devices that need to receive the above reference signal. It can be seen that determining at least one unoccupied candidate resource in the candidate resource set within the resource sensing window may be triggered by receiving the positioning request.

In one possible implementation, the method further includes: performing resource sensing on the candidate resource set within a resource sensing window, after receiving the positioning request. Determining at least one unoccupied candidate resource in the candidate resource set within the resource sensing window includes: determining at least one unoccupied candidate resource in the candidate resource set according to a resource sensing result for the candidate resource set within the resource sensing window. It can be seen that resource sensing on the candidate resource is started within the resource sensing window after receiving the positioning request, and this may save power consumption.

In one possible implementation, the method further includes: determining a resource sensing result for the candidate resource set within the resource sensing window, after receiving the positioning request, where the resource sensing window is located before a time domain resource of the positioning request. Determining at least one unoccupied candidate resource in the candidate resource set within the resource sensing window may include: determining at least one unoccupied candidate resource in the candidate resource set according to a resource sensing result for the candidate resource set within the resource sensing window. This helps to improve the reliability of determining at least one unoccupied candidate resource in the candidate resource set, and further improves the possibility of successful reference signal transmission.

In one possible implementation, the reference-signal transmission resource information includes at least one of following parameters: a reference signal resource period, a starting frequency domain resource position of a reference signal, a starting time domain resource position of a reference signal, a number of symbols occupied by a reference signal, a resource element (RE) offset, a reference signal pattern, a reference signal subcarrier spacing, a cyclic prefix (CP) type, and a number of resource blocks (RBs) occupied by a reference signal. It can be seen that the parameters included in the reference-signal transmission resource information may be used to determine the candidate resource set for transmitting the reference signal.

In one possible implementation, the method further includes: transmitting sidelink control information (SCI), where the SCI includes a part or all of parameters in the reference-signal transmission resource information. It can be seen that a part or all of parameters is carried in SCI, so that dynamic adjustment of the parameters can be achieved, thereby improving the flexibility of transmission.

In one possible implementation, the reference-signal transmission resource information is preconfigured.

In one possible implementation, the parameters in the reference-signal transmission resource information are configured for a carrier channel; or the parameters in the reference-signal transmission resource information are configured for a bandwidth part (BWP); or the parameters in the reference-signal transmission resource information are configured for a resource pool; or some of the parameters in the reference-signal transmission resource information are configured for the carrier channel, some of the parameters are configured for the BWP, and/or some of the parameters are configured for the resource pool.

In a second aspect, the present disclosure provides a signal transmission method. The method may incudes: determining a candidate resource set available for transmitting the reference signal according to reference-signal transmission resource information; and receiving the reference signal on all or a part of candidate resources in the candidate resource set. It can be seen that the probability of missing the reference signal may be reduced by attempting to receive a reference signal on all or a part of the candidate resources included in the candidate resource set.

In one possible implementation, the method further includes: transmitting a positioning request, where the positioning request is used to request a sidelink (SL) positioning. It can be seen the SL positioning may be triggered by transmitting the positioning request.

In one possible implementation, a time-domain resource start receiving position of the reference signal is spaced apart from a time-domain resource end receiving position of the positioning request by a first duration, where the first duration is preconfigured. It can be seen that when to start to attempt to receive the reference signal may be determined through the first duration.

In one possible implementation, the reference-signal transmission resource information includes at least one of following parameters: a reference signal resource period, a starting frequency domain resource position of a reference signal, a starting time domain resource position of a reference signal, a number of symbols occupied by a reference signal, an RE offset, a reference signal pattern, a reference signal subcarrier spacing, a number of RBs occupied by a reference signal, and a CP type. It can be seen that the parameters included in the reference-signal transmission resource information may be used to determine the candidate resource set for transmitting the reference signal.

In one possible implementation, the reference-signal transmission resource information is preconfigured.

In one possible implementation, the parameters in the reference-signal transmission resource information are configured for a carrier channel; or the parameters in the reference-signal transmission resource information are configured for a BWP; or the parameters in the reference-signal transmission resource information are configured for a resource pool; or some of the parameters in the reference-signal transmission resource information are configured for the carrier channel, some of the parameters are configured for the BWP, and/or some of the parameters are configured for the resource pool.

In one possible implementation, the method further includes: receiving SCI; and determining a terminal device identifier according to the SCI, where the terminal device identifier is configured to identify a device for transmitting the reference signal. Therefore, it may be known which terminal device the reference signal comes from according to the SCI.

In one possible implementation, the SCI includes a part or all of the parameters in the reference-signal transmission resource information. It can be seen that the SCI carries a part or all of parameters, so that dynamic adjustment of the parameters can be achieved, thereby improving the flexibility of transmission.

In a third aspect, the present disclosure provides a communication apparatus. The communication apparatus includes a communication unit and a processing unit. The processing unit is configured to determine a candidate resource set for transmitting the reference signal according to reference-signal transmission resource information; and determine at least one unoccupied candidate resource in the candidate resource set within a resource sensing window. The communication unit is configured to transmit the reference signal on N candidate resources in the at least one candidate resource within the resource selection window, where N is a positive integer greater than or equal to 1.

In a fourth aspect, the present disclosure provides a communication apparatus. The communication apparatus includes a communication unit and a processing unit. The processing unit is configured to determine a candidate resource set available for transmitting the reference signal according to reference-signal transmission resource information. The communication unit is configured to receive the reference signal on all or a part of candidate resources included in the candidate resource set.

In a fifth aspect, the present disclosure provides a communication apparatus. The communication apparatus includes a processor, a memory, and a computer program or instruction stored in the memory, where the processor is configured to execute the computer program or instruction to implement the method in the first aspect and any possible implementation thereof; or implement the method in the second aspect and any possible implementation thereof.

In a sixth aspect, the present disclosure provides a chip. In one possible implementation, the chip is configured to determine a candidate resource set for transmitting the reference signal according to reference-signal transmission resource information; determine at least one unoccupied candidate resource in the candidate resource set within a resource sensing window; and transmit the reference signal on *N* candidate resources in the at least one candidate resource within the resource selection window, where *N* is a positive integer greater than or equal to 1. In another implementation, the chip is configured to determine a candidate resource set available for transmitting the reference signal according to reference-signal transmission resource information; and receive the reference signal on all or a part of candidate resources included in the candidate resource set.

In a seventh aspect, the present disclosure provides a computer-readable storage medium, having a computer-readable instruction stored thereon, where the computer-readable instruction, when executed by a computer, causes the communication apparatus to implement the method in the first aspect and any possible implementation thereof; or implement the method in the second aspect and any possible implementation thereof.

In an eight aspect, the present disclosure provides a computer program or computer program product, including a code or instruction, where the code or instruction, when executed by a computer, causes the computer to implement the method in the first aspect and any possible implementation thereof; or implement the method in the second aspect and any possible implementation thereof.

In a ninth aspect, the present disclosure provides a module device. The module device includes a communication module, a power supply module, a storage module and a chip module. The power supply module is configured to provide electric energy for the module device; the storage module is configured to store data and instructions; the communication module is configured for internal communication of the module device, or communication between the module device and an external device; and the chip module is configured to implement the method in the first aspect and any possible implementation thereof; or implement the method in the second aspect and any possible implementation thereof.

In a tenth aspect, the present disclosure provides a communication system. The communication system includes a communication apparatus configured to implement the method in the first aspect and any possible implementation thereof and a communication apparatus configured to implement the method in the second aspect and any possible implementation thereof.

### BRIEF DESCRIPTION OF THE DRAWINGS

FIG. 1 is a schematic diagram of an architecture of a communication system to which the present disclosure is applied.
FIG. 2 is a schematic diagram of a resource pool.
FIG. 3 is a schematic flow diagram of a signal transmission method provided in the present disclosure.
FIG. 4 is an exemplary diagram of determining an unoccupied candidate resource provided in the present disclosure.
FIG. 5 is another exemplary diagram of determining an unoccupied candidate resource provided in the present disclosure.
FIG. 6 is a schematic diagram of a relationship among a carrier channel, a BWP and the resource pool.
FIG. 7 is a schematic flow diagram of another signal transmission method provided in the present disclosure.
FIG. 8 is a schematic flow diagram of yet another signal transmission method provided in the present disclosure.
FIG. 9 is a schematic structure diagram of a communication apparatus provided in the present disclosure.
FIG. 10 is a schematic structure diagram of another communication apparatus provided in the present disclosure.
FIG. 11 is a schematic structure diagram of a chip module provided in the embodiments of the present disclosure.

### DETAILED DESCRIPTION

In the present disclosure, the words such as "first" and "second" are used to distinguish same or similar items having substantially the same functions and effects. Those skilled in the art may understand that the words such as "first" and "second" do not limit the quantity and execution order, and the words such as "first" and "second" do not necessarily limit a difference. The expression "and/or" describes an association relationship of associated objects, and indicates that three relationships may exist. For example, A and/or B may refer to that: A exists alone, A and B exist at the same time, and B exists alone. The symbol "/" generally indicates that the associated preceding and subsequent objects are in an "or" relationship.

It may be understood that, in the present disclosure, the expression "at least one" refers to one or more; and the expression "plurality" refers to two or more. In addition, the expression "equal to" in the present disclosure may be used together with the expression "greater than" or "less than". In a case where the expressions "equal to" and "greater than" are used together, the technical solution of "greater than" is adopted; and in a case where the expressions "equal to" and "less than" are used together, the technical solution of "less than" is adopted.

First, the system architecture involved in the present disclosure is explained.

The present disclosure may be applied to a 5^{th} generation (5G) system, also referred to as a new radio (NR) system; or may be applied to a 6^{th} generation (6G) system, or a 7^{th} generation (7G) system, or another future communication system; or may also be used in a device to device (D2D) system, a machine to machine (M2M) system, a vehicle to everything (V2X), and the like.

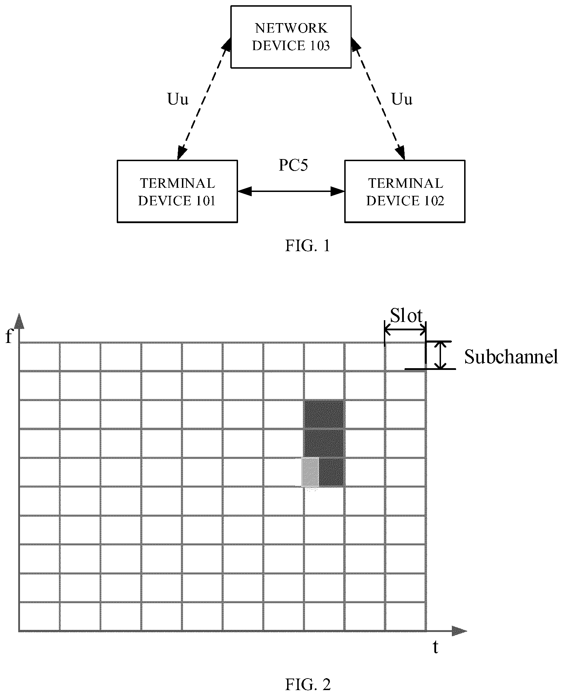

The present disclosure may be applied to a communication system illustrated in FIG. 1. The communication system illustrated in FIG. 1 may include, but is not limited to, a terminal device 101 and a terminal device 102. Optionally, the communication system illustrated in FIG. 1 may further include a network device 103. The numbers and forms of the devices in FIG. 1 are for illustrative purposes only and do not constitute a limitation to the embodiments of the present disclosure. For example, in an actual application, multiple network devices and/or more terminal devices may be included.

A terminal device, also known as user equipment (UE), a mobile station (MS), a terminal (MT), etc., refers to a device that provides voice and/or data connectivity to a user, such as a handheld device and a vehicle-mounted device with a wireless connection function. At present, some examples of a terminal devices are: a mobile phone, a tablet computer, a laptop, a personal digital assistant (PDA), a mobile internet devices (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart cities, a wireless terminal in a smart home, etc.

In the present disclosure, an apparatus for implementing the functions of the terminal device may be the terminal device; or may be an apparatus that may support the terminal device to implement the functions, such as a chip module. The apparatus may be installed in the terminal device or matched with the terminal device for use. In the technical solution provided in the present disclosure, an apparatus for implementing the functions of the terminal device being the terminal device is taken as an example to describe the technical solution provided in the present disclosure.

A network device, also known as an access network device, refers to a radio access network (RAN) node (or device) that accesses a terminal device to a wireless network, and may also be called a base station. At present, some examples of an RAN nodes are: a next generation node B (gNB), a transmission reception point (TRP), an evolved Node B (eNB), a radio network controller (RNC), a node B (NB), a base station controller (BSC), a base transceiver station (BTS), a home base station (e.g., a home evolved node B, or a home node B (HNB)), a base band unit (BBU), a wireless fidelity (WiFi) access point (AP), etc. In addition, in one network structure, the network device may include a centralized unit (CU) node, a distributed unit (DU) node, or a RAN device including the CU node and the DU node. It should be noted that the centralized unit node and the distributed unit node may also have other names, which are not limited in the present disclosure.

In the present disclosure, a communication interface between the terminal device 101 and the terminal device 102 may be referred to as a PC5 port or a sidelink (SL) port, that is, a communication interface between terminal devices may be referred to as a PC5 port or an SL port. A communication link between the terminal device 101 and the terminal device 102 may be referred to a sidelink (SL), and the sidelink may also be described as an edge link, a through link, a direct link, a direct connection link, a secondary link or a PC5 link. A communication interface between the network device 103 and a terminal device may be referred to as a Uu port, and a communication link between the network device 103 and the terminal device may be referred to as a Uu link. The Uu link may also be described as a Uu port link or a primary link.

In one implementation, the terminal device 101 and the terminal device 102 are both within the coverage of the network device 103, and therefore, the terminal device 101 and the terminal device 102 may directly communicate with each other, the terminal device 101 may communicate with the network device 103, and the terminal device 102 may communicate with the network device 103.

In another implementation, the terminal device 101 is within the coverage of the network device 103, while the terminal device 102 is outside the coverage of the network device 103, and therefore, the terminal device 101 and the terminal device 102 may directly communicate with each other, and the terminal device 101 may communicate with the network device 103. Alternatively, the terminal device 102 is within the coverage of the network device 103, while the terminal device 101 is outside the coverage of the network device 103, and therefore, the terminal device 101 and the terminal device 102 may directly communicate with each other, and the terminal device 102 may communicate with the network device 103.

In yet another implementation, the terminal device 101 and the terminal device 102 are both outside the coverage of the network device 103, and the terminal device 101 and the terminal device 102 may directly communicate with each other.

It may be understood that the communication system described in the embodiments of the present disclosure is used to more clearly illustrate the technical solutions of the embodiments of the present disclosure, and does not constitute a limitation to the technical solutions provided in the embodiments of the present disclosure. Those skilled in the art may be aware that with the evolution of the system architecture and the emergence of new service scenarios, the technical solutions provided in the embodiments of the present disclosure are also applicable to similar technical problems.

Second, the relevant names or terms involved in the present disclosure are explained to facilitate understanding by those skilled in the art.

### I. Mode for SL resource allocation

There may be two modes for SL resource allocation, which are respectively mode 1 and mode 2. In mode 1, resource allocation is scheduled by a base station, that is, the base station allocates an SL resource to the terminal device. In mode 2, the terminal device independently selects an SL resource, for example, the terminal device selects an SL resource from a resource pool.

Mode 2 is further divided into four submodes, which are respectively mode 2a, mode 2b, mode 2c and mode 2d. In mode 2a, the terminal device independently selects an SL resource for an SL transmission, and mode 2a may also be described as a sensing-based resource selection mode. In mode 2b, one terminal device assists another terminal device in selecting an SL resource for transmission. In mode 2c, an SL transmission is configured through a configured grant of the base station. In mode 2d, a terminal device schedules an SL transmission of another terminal device. The present disclosure relates to mode 2a, that is, the sensing-based resource selection mode is adopted in the present disclosure.

The sensing-based resource selection mode relates to a resource pool. The resource pool refers to some preconfigured time-frequency resources. For example, a preconfigured time domain resource is subframe 1, and a frequency domain resource is 20M bandwidth.

FIG. 2 illustrates a schematic diagram of a resource pool. For this resource pool, a granularity of the time domain is a slot, and a granularity of the frequency domain is a subchannel. One subchannel may include *m* RBs, and the specific value of *m* may be configured by a higher layer, for example, 6 or 12 RBs may be configured by a higher layer. When selecting a resource, the terminal device determines that *n* subchannels are required for transmission (*n* is a positive integer greater than or equal to 1) according to a size of a data packet, and then the transmission resource is *n* consecutive subchannels in a certain slot in the resource pool. For example, in FIG. 2, the transmission resource occupied by both the dark gray part and the light gray part may be represented as a transmission resource of *n*=3. A physical side link control channel (PSCCH) and a physical side link shared channel (PSSCH) will be transmitted on each transmission resource at the same time. That is, each transmission includes a PSCCH and a PSSCH. In FIG. 2, the light gray part represents the PSCCH, and the dark gray part represents the PSSCH.

### II. Reference signal

In the present disclosure, the reference signal is used to describe a reference signal transmitted between terminal devices for SL positioning. The reference signal may also be described as a positioning reference signal, an SL reference signal or an SL positioning reference signal. The name of the reference signal is not limited in the present disclosure, and it is not excluded to use other names to describe the reference signal transmitted between terminal devices for SL positioning. The reference signal may be in the form of SL-PRS, SLPRS, SPRS, or SLSRS. With the evolution of the standard, the reference signal may be in other forms. In the following, for example, the reference signal is in the form of SPRS.

An SL positioning refers to a positioning performed based on an SPRS transmitted through an SL port or SL. For example, terminal device 2 transmits an SPRS to terminal device 1, and terminal device 1 may determine position information of the terminal device 1 and/or terminal device 2 by measuring the SPRS transmitted by terminal device 2. The SL positioning may also be described as an SL port positioning, an edge link positioning, a secondary link positioning, or a direct link positioning.

### III. Candidate resource set

In the present disclosure, a candidate resource set may include one or more candidate resources, and the one or more candidate resources are configured for reference signal transmission. For example, the candidate resource set is one or more candidate resources configured for SPRS transmission. A candidate resource may be, for example, a time-frequency resource.

A resource sensing may be performed to determine which candidate resource or resources in a candidate resource set can be used to transmit a reference signal, and which candidate resource or resources cannot be used to transmit a reference signal. For example, the resource sensing is performed on the candidate resource set within a resource sensing window to determine a candidate resource(s) that can be used to transmit a reference signal in the candidate resource set, and/or determine a candidate resource(s) that cannot be used to transmit a reference signal in the candidate resource set.

A resource sensing result of the candidate resource set may be obtained by performing resource sensing on the candidate resource set. The resource sensing result of the candidate resource set may include a candidate resource(s) that can be used to transmit a reference signal in the candidate resource set, and/or a candidate resource(s) that cannot be used to transmit a reference signal in the candidate resource set. In the present disclosure, a candidate resource that can be used to transmit a reference signal in the candidate resource set is referred to as an unoccupied candidate resource in the candidate resource set, and a candidate resource that cannot be used to transmit a reference signal in the candidate resource set is referred to as an occupied candidate resource in the candidate resource set. It should be noted that these two terms are used as examples, and do not constitute a limitation to the present disclosure. For the convenience of description, the unoccupied candidate resource in the candidate resource set is simply referred to as an unoccupied candidate resource, and the occupied candidate resource in the candidate resource set is simply referred to as an occupied candidate resource.

A candidate resource being not occupied means that the candidate resource is not occupied by other terminal devices, and thus the candidate resource may be used by the terminal device to transmit a reference signal. A candidate resource being not occupied by other terminal devices may be understood as the candidate resource being not used by other terminal devices to transmit a positioning reference signal, and/or the candidate resource being not reserved by other terminal devices to transmit a positioning reference signal. For example, the terminal device 1 determines candidate resource 1 and candidate resource 2 in resource pool 1 as candidate resources for transmitting a positioning reference signal. Within resource sensing window 1, the candidate resource 1 is not used by the terminal device 2 to transmit a positioning reference signal, but the candidate resource 1 is reserved and occupied by terminal device 3. In this case, the candidate resource 1 is not an unoccupied candidate resource. Within the resource sensing window 1, the candidate resource 2 is neither used by the terminal device 2 to transmit a positioning reference signal, nor reserved by the terminal device 3 to transmit a positioning reference signal. In this case, the candidate resource 2 is an unoccupied candidate resource.

A candidate resource being occupied means that the candidate resource is occupied by other terminal devices, and thus the candidate resource cannot be used by the terminal device to transmit a reference signal. A candidate resource being occupied by other terminal devices may be understood as the candidate resource being used by other terminal devices to transmit a positioning reference signal, and/or the candidate resource being reserved by other terminal devices to transmit a positioning reference signal. For example, the terminal device 1 determines the candidate resource 1 and the candidate resource 2 in the resource pool 1 as candidate resources for transmitting a positioning reference signal. Within the resource sensing window 1, the candidate resource 1 is not used by the terminal device 2 to transmit a positioning reference signal, but the candidate resource 1 is reserved and occupied by the terminal device 3. In this case, the candidate resource 1 is an occupied candidate resource. Within the resource sensing window 1, the candidate resource 2 is used by terminal device 2 to transmit a positioning reference signal. In this case, the candidate resource 2 is an occupied candidate resource.

A signal transmission method provided in the present disclosure will be described below. The signal transmission method may be implemented by a terminal device, or by an apparatus matched with the terminal device, such as a chip, a chip module or a processor. In the present disclosure, for example, the signal transmission method is implemented by a terminal device.

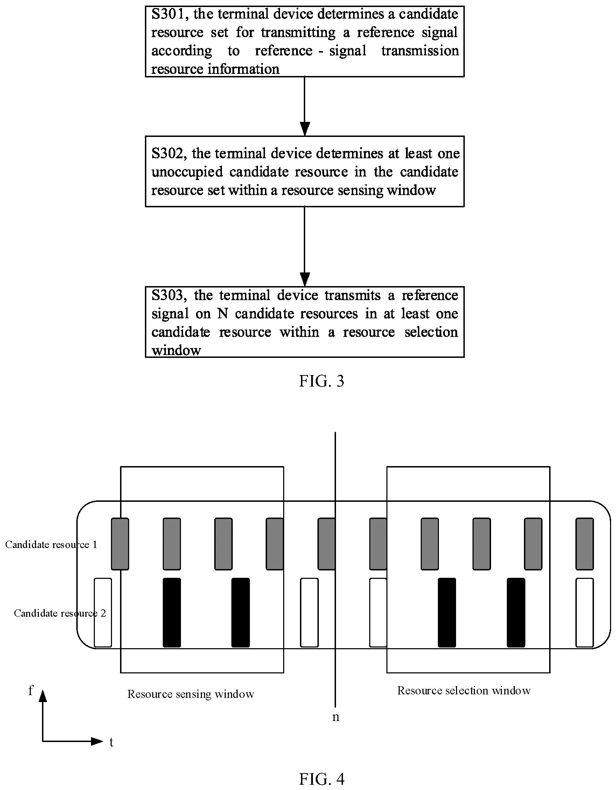

Referring to FIG. 3, FIG. 3 is a schematic diagram of a flow of a signal transmission method provided in the embodiments of the present disclosure. The method may include, but is not limited, to the following steps.

S301, the terminal device determines a candidate resource set for transmitting a reference signal according to reference-signal transmission resource information.

In the above step, the reference-signal transmission resource information is used to describe a resource configured for reference signal transmission, such as a time-frequency resource. The reference-signal transmission resource information may also be described as resource configuration information of the reference signal, transmission configuration information of the reference signal, or transmission resource configuration information of the reference signal. Optionally, the reference-signal transmission resource information is not used to transmit data, for example, is not used to transmit a PSSCH.

Optionally, the reference-signal transmission resource information may include at least one of the following parameters.

A reference signal resource period: the reference signal resource period may also be described a resource period of a reference signal or a transmission period of a reference signal. In the time domain, a reference signal may be transmitted periodically. For example, the reference signal resource period is 10 ms.

A start frequency-domain resource position of a reference signal: the start frequency-domain resource position of a reference signal is used to describe where a frequency domain resource of the reference signal starts to be occupied. For example, the start frequency-domain resource position of a reference signal is used to describe an index of a start resource block (RB) of the reference signal.

A start time-domain resource position of a reference signal: the start time-domain resource position of a reference signal is used to describe where a time domain resource of the reference signal starts to be occupied. For example, the start time-domain resource position of a reference signal is used to describe a start slot and/or a start symbol of the reference signal.

The number of symbols occupied by a reference signal: the number of symbols occupied by a reference signal is used to describe how many symbols the reference signal occupies in the time domain. For example, the number of symbols occupied by a reference signal may be used to describe the number of symbols continuously occupied by the reference signal.

The number of RBs occupied by a reference signal: the number of RBs occupied by a reference signal is used to describe how many RBs the reference signal occupies in the frequency domain. For example, the number of RBs occupied by a reference signal may be used to describe the number of RBs continuously occupied by the reference signal.

A resource element (RE) offset: the RE offset is used to describe an amount of REs offset relative to a previous reference signal, i.e., how many REs are offset.

A reference signal resource pattern.

A reference signal subcarrier spacing (SCS): the reference signal SCS is used to describe a subcarrier spacing of a reference signal. A subcarrier spacing may be, for example, 15 kHz, 30 kHz, 60 kHz, 120 kHz, or 240 kHz.

A cyclic prefix (CP) type: the CP type includes a normal cyclic prefix and an extended cyclic prefix.

It should be noted that the above parameters are used as examples only, and do not constitute a limitation to the present disclosure.

Further, the terminal device may determine the candidate resource set for transmitting the reference signal through the parameters included in the reference-signal transmission resource information. The candidate resource set may include one or more candidate resources, and the number (that is, quantity) of candidate resources is related to the reference-signal transmission resource information.

S302, the terminal device determines at least one unoccupied candidate resource in the candidate resource set within a resource sensing window.

Optionally, the terminal device determines at least one unoccupied candidate resource in the candidate resource set according to a resource sensing result of the candidate resource set within the resource sensing window. A candidate resource being not occupied means that the candidate resource is not occupied by other terminal devices. A candidate resource being not occupied by other terminal devices may be understood as the candidate resource being not used by other terminal devices to transmit a positioning reference signal, and/or the candidate resource being not reserved by other terminal devices to transmit a positioning reference signal. For example, the terminal device 1 determines candidate resource 1 and candidate resource 2 in resource pool 1 as candidate resources for transmitting a positioning reference signal according to the reference-signal transmission resource information. The terminal device 1 determines, according to the resource sensing result, that the candidate resource 1 is not used by the terminal device 2 to transmit a positioning reference signal, but the candidate resource 1 is reserved and occupied by terminal device 3, and in this case, the candidate resource 1 is not an unoccupied candidate resource; and that the candidate resource 2 is neither used by the terminal device 2 to transmit a positioning reference signal, nor reserved by the terminal device 3 to transmit a positioning reference signal, and in this case, the candidate resource 2 is an unoccupied candidate resource.

S303, the terminal device transmits a reference signal on N candidate resources in at least one candidate resource within a resource selection window.

In the above step, *N* is a positive integer greater than or equal to 1, and the value of *N* may be the same as the number of the at least one candidate resource, or may be less than the number of the at least one candidate resource. For example, if the number of the at least one candidate resource is 3, then the value of N may be 1, 2, or 3. It may be understood that the number of candidate resources for transmitting a reference signal is less than or equal to the number of the above at least one candidate resource.

In the time domain, the resource sensing window is earlier than the resource selection window. In the present disclosure, the size of the resource sensing window and the size of the resource selection window may be separately preconfigured or preset, or the sizes of the resource sensing window and the resource selection window corresponding to the SL data transmission may be used.

Optionally, the terminal device may also receive a positioning request. The positioning request is used to request an SL positioning, and may also be understood as being used to trigger a resource selection. The positioning request may be transmitted by other terminal devices, for example, terminal device 1 receives a positioning request from the terminal device 2. The terminal device may receive the positioning request prior to step S302 or prior to step S303, which is not limited in the present disclosure.

Two mechanisms for transmitting a reference signal by the terminal device will be described below.

Mechanism 1: The terminal device periodically performs resource sensing on a candidate resource set, where within one period, the terminal device performs a sensing on the candidate resource set within a resource sensing window of the period. If the terminal device receives a positioning request, the terminal device determines at least one unoccupied candidate resource in the candidate resource set according to a resource sensing result of the candidate resource set within a resource sensing window located before a time domain resource of the positioning request, and transmits a reference signal on N candidate resources in at least one candidate resource within a resource selection window.

Exemplarily, the terminal device determines the at least one unoccupied candidate resource in the candidate resource set according to a resource sensing result within a resource sensing window that is located before the time domain resource of the positioning request and closest to the time domain resource of the positioning request. This helps to improve the reliability of determining at least one unoccupied candidate resource in the candidate resource set, and further improves the possibility of successful reference signal transmission.

The time domain resource of the positioning request may be, for example, a slot or symbol occupied by the positioning request. In the present disclosure, for example, the time domain resource of the positioning request is a slot occupied by the positioning request, for example, a slot index corresponding to the positioning request is *n.* The resource sensing window being located before the time domain resource of the positioning request may also be understood as a slot of the resource sensing window being located before a slot occupied by the positioning request, or a slot index corresponding to the resource sensing window being smaller than a slot index corresponding to the positioning request, for example, a maximum slot index corresponding to the resource sensing window being smaller than or equal to the slot index corresponding to the positioning request.

For example, FIG. 4 illustrates an example diagram of determining an unoccupied candidate resource. In FIG. 4, the candidate resource set includes the candidate resource 1 (a first line of resources in FIG. 4) and the candidate resource 2 (a second line of resources in FIG. 4), the slot index corresponding to the positioning request is *n,* the terminal device determines the unoccupied candidate resource 1 in the candidate resource set according to the resource sensing result for the candidate resource set in the resource sensing window located before the slot index *n* (for example, the candidate resource 1 is not occupied, while the candidate resource 2 is occupied), and then the terminal device selects the candidate resource 1 to transmit a reference signal in the resource selection window located after the slot index *n*. It should be noted that the occupied candidate resource 2 is not used to transmit a reference signal. If all candidate resources in the candidate resource set are occupied, the terminal device may not transmit a reference signal.

Optionally, the relationships among the resource sensing window, the slot index *n*, and the resource selection window in the time domain may be preconfigured or preset.

Mechanism 2: After receiving a positioning request, the terminal device starts or triggers a resource sensing on the candidate resource set, i.e., performs resource sensing on the candidate resource set within the resource sensing window. The terminal device determines a resource sensing result for the candidate resource set within the resource sensing window according to the resource sensing result, determines at least one unoccupied candidate resource in the candidate resource set according to the resource sensing result, and transmits a reference signal on N candidate resources in at least one candidate resource within the resource selection window. This helps save power consumption of the terminal devices.

The terminal device does not perform the resource sensing on the candidate resource set before receiving the positioning request, but performs the resource sensing on the candidate resource set within the resource sensing window after receiving the positioning request. The size of the resource sensing window *P* (e.g., *P* slots) may be preconfigured, or the relationship between the resource sensing window *P* and the time domain resource of the positioning request may be preconfigured.

Example 1: The candidate resource set includes the candidate resource 1 and the candidate resource 2, the slot index corresponding to the positioning request is *n,* and the terminal device starts the resource sensing window on a slot with a slot index of *n,* and the size of the resource sensing window is, for example, preconfigured *P* slots. The terminal device determines the unoccupied candidate resource 1 in the candidate resource set according to the resource sensing result for the candidate resource set in the resource sensing window (for example, the candidate resource 1 is not occupied, while the candidate resource 2 is occupied). Then, the terminal device starts the resource selection window on a slot with a slot index of *n+P* (or *n+P+k,* where *k* is, for example, a slot interval between a preconfigured resource sensing window and resource selection window), where the size of the resource selection window is, for example, preconfigured *Q* slots, and the terminal device use the candidate resource 1 to transmit a reference signal within the resource selection window. It should be noted that the occupied candidate resource 2 is not used to transmit a reference signal. If all candidate resources in the candidate resource set are occupied, the terminal device may not transmit a reference signal.

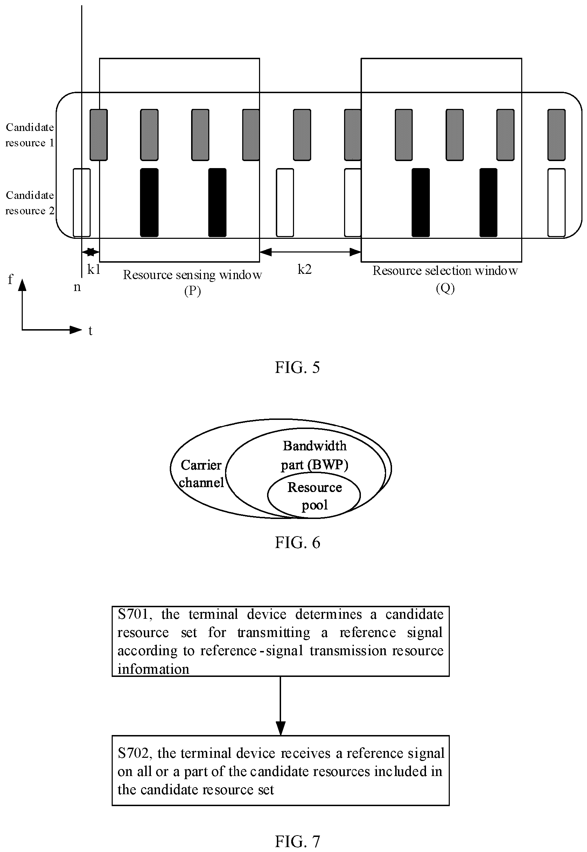

Example 2: FIG. 5 illustrates an example diagram of determining an unoccupied candidate resource. In FIG. 5, the candidate resource set includes the candidate resource 1 (a first line of resources in FIG. 5) and the candidate resource 2 (a second line of resources in FIG. 5), the slot index corresponding to the positioning request is *n,* and the terminal device starts the resource sensing window on a slot with a slot index of *n+k*1 (*k*1 is, for example, preconfigured *k*1 slots), and the size of the resource sensing window is, for example, preconfigured *P* slots. The terminal device determines the unoccupied candidate resource 1 in the candidate resource set according to the resource sensing result for the candidate resource set in the resource sensing window (for example, the candidate resource 1 is not occupied, while the candidate resource 2 is occupied). Then, the terminal device starts the resource selection window on a slot with a slot index of *n+P+k*1*+k*2 (or *n+P+k*2, where *k*2 is, for example, a slot interval between a preconfigured resource sensing window and resource selection window), where the size of the resource selection window is, for example, preconfigured *Q* slots, and uses the candidate resource 1 to transmit a reference signal within the resource selection window. It should be noted that the occupied candidate resource 2 is not used to transmit a reference signal. If all candidate resources in the candidate resource set are occupied, the terminal device may not transmit a reference signal.

In the embodiment illustrated in FIG. 3, at least one unoccupied candidate resource in the candidate resource set is determined within the resource sensing window, so that a candidate resource for transmitting a reference signal is determined, thereby transmitting the reference signal. The reference signal may be a sidelink reference signal, thereby achieving sidelink reference signal transmission and improving resource utilization of the sidelink.

In some embodiments, reference-signal transmission resource information is preconfigured. "Preconfigured" may be understood as configured by the terminal device itself, for example, a higher layer of the terminal device configures the reference-signal transmission resource information for a lower layer of the terminal device. The preconfigured reference-signal transmission resource information may be one set or multiple sets, and each set of reference-signal transmission resource information may include at least one of the above parameters. The reference-signal transmission resource information is preconfigured, so that the terminal device may determine the candidate resource set for transmitting the reference signal, thereby achieving sidelink reference signal transmission.

In one implementation, the parameters in the reference-signal transmission resource information are configured for a carrier channel, for example, for a SL carrier channel. For example, all parameters in the reference-signal transmission resource information are configured for carrier channel 1, and therefore, all parameters are applicable to the entire carrier channel 1, that is, the parameters corresponding to reference signal transmission on the carrier channel 1 are the same.

In another implementation manner, the parameters in the reference-signal transmission resource information are configured for a BWP, for example, for an SL BWP. For example, all parameters in the reference-signal transmission resource information are configured for BWP1, and therefore, all parameters are applicable to the entire BWP1, that is, the parameters corresponding to reference signal transmission on the BWP1 are the same.

In yet another implementation, the parameters in the reference-signal transmission resource information are configured for a resource pool. For example, all parameters in the reference-signal transmission resource information are configured for the resource pool 1, and therefore, all parameters are applicable to the entire resource pool 1, that is, the parameters corresponding to the reference signal transmission the on resource pool 1 are the same.

In yet another implementation, some parameters in the transmission resource of the reference signal are configured for the carrier channel, some parameters are configured for the BWP, and/or some parameters are configured for the resource pool. It may also be described as that the parameters in the reference-signal transmission resource information satisfy at least one of the following conditions: some parameters are configured for the carrier channel, some parameters are configured for the BWP, and some parameters are configured for the resource pool. Some parameters may also be described as at least one parameter or *K* parameters, where *K* is a positive integer greater than or equal to 1.

For example, if the reference signal pattern, the reference signal subcarrier spacing and the number of RBs occupied by the reference signal are configured for the carrier channel 1, then the reference signal pattern, the reference signal subcarrier spacing and the number of RBs occupied by the reference signal corresponding to reference signal transmission on the carrier channel 1 are all the same. If the start time-domain resource position of the reference signal, the number of symbols occupied by the reference signal, and the RE offset are configured for the BWP1, the start time-domain resource position of the reference signal, the number of symbols occupied by the reference signal, and the RE offset corresponding to reference signal transmission on the BWP1 are all the same. If the remaining parameters are configured for the resource pool 1, the remaining parameters corresponding to reference signal transmission on the resource pool 1 are all the same.

Further, the terminal device may quickly determine the reference-signal transmission resource information according to at least one of the carrier channel, BWP and resource pool where the reference signal is transmitted, and then determine the candidate resource set for reference signal transmission, thereby achieving sidelink reference signal transmission. It may be understood that the terminal device determines the reference-signal transmission resource information according to at least one of the preconfigured carrier channel, BWP and resource pool.

It may be understood that the parameters in the transmission resources of the reference signal may be classified into parameters of a carrier channel level, a BWP level, and a resource pool level. All parameters may be classified into one level, or different parameters may be classified into different levels.

The relationship among the carrier channel, the BWP and the resource pool may be referred to in FIG. 6. The range of the carrier channel is larger than the range of the BWP, and the range of the BWP is larger than the range of the resource pool. For example, the bandwidth of the carrier channel 1 is 20M, the bandwidth of the BWP1 is 10M, and the bandwidth of the resource pool is 4M.

In some embodiments, some parameters in the reference-signal transmission resource information are preconfigured, and other parameters may be carried through the SCI. For example, the terminal device not only transmits a reference signal on the *N* candidate resources, but also transmit SCI. The SCI includes some or all parameters in the reference-signal transmission resource information. For example, the SCI includes one or more of the start time-domain resource position of the reference signal, the number of symbols occupied by the reference signal, the RE offset, and the reference signal pattern.

Transmission resources of one or more reference signal may be transmitted on one transmission block of a transmission resource of a reference signal, and different reference signals may occupy different symbols, different REs, or different reference signal patterns. The terminal device transmitting the reference signal needs to indicate different parameters in the SCI, such as one or more of the start time-domain resource position of the reference signal, the number of symbols occupied by the reference signal, the RE offset, and the reference signal pattern. Different reference signals occupy different parameters. Different parameters are indicated through the SCI, so that dynamic adjustment may be achieved, thereby improving the flexibility of transmission.

Optionally, the slot in which the terminal device transmits a reference signal and the slot in which the terminal device transmits SCI are the same slot or different slots, that is, the reference signal and the SCI may be located in the same slot or different slots. If the reference signal and the SCI are located in the same slot, this helps the terminal device receiving the reference signal to quickly decode the SCI. If the reference signal and the SCI are located in different slots, this helps to improve the reliability of transmission.

Referring to FIG. 7, FIG. 7 is a schematic flow diagram of another signal transmission method provided in the embodiments of the present disclosure. The method may include, but is not limited, to the following steps.

S701, the terminal device determines a candidate resource set for transmitting a reference signal according to reference-signal transmission resource information.

For implementation of step S701, reference may be made to step S301, which will not be repeated here.

S702, the terminal device receives a reference signal on all or a part of the candidate resources included in the candidate resource set.

Optionally, the terminal device may also transmit a positioning request. The positioning request is used to request an SL positioning. This may also be understood as that the positioning request is used to trigger a device that receives the positioning request to perform a resource selection. The positioning request may be transmitted to other terminal devices, for example, the terminal device 2 transmits a positioning request to the terminal device 1. The terminal device may transmit the positioning request prior to step S702.

In one implementation, after transmitting the positioning request, the terminal device immediately attempts to receive a reference signal on all or a part of the candidate resources included in the candidate resource set. This reduces the probability of missing the reference signal.

In another implementation, after transmitting the positioning request, the terminal device postpones or delays for a first duration and then attempts to receive the reference signal on all or a part of the candidate resources included in the candidate resource set. This helps save power consumption. It may be understood that a time-domain resource start receiving position of the reference signal is spaced apart from a time-domain resource end receiving position of the positioning request by a first duration. The first duration is preconfigured. The unit of the first duration may be a symbol, for example, the first duration may be *X* symbols; or the unit of the first duration may be a slot, for example, the first duration may be *X* slots; or the unit of the first duration may be millisecond (ms) or microsecond (us). The value of *X* may be 0, or may also be a positive integer greater than or equal to 1. Optionally, the length of the first duration is the same as the size of the preconfigured resource sensing window. When the value of X is zero, it means that after transmitting the positioning request, the terminal device immediately attempts to receive the reference signal on all or a part of the candidate resources included in the candidate resource set.

Optionally, before receiving the reference signal, the terminal device receives the SCI and determines a terminal device identifier (ID) according to the SCI. The terminal device ID is used to identify a transmitting device of the reference signal, i.e., the terminal device that transmits the reference signal. The terminal device ID is determined according to the SCI, for example, the terminal device ID is determined by decoding the SCI. Decoding the SCI includes decoding a first order SCI and/or a second order SCI. The terminal device may determine which terminal device the reference signal comes from by decoding the SCI. The terminal device ID may include, but is not limited to, a radio network temporary identity (RNTI), an international mobile subscriber identification number (IMSI), an international mobile equipment identity (IMEI), etc.

Further, the SCI may include some or all parameters in the reference-signal transmission resource information. For example, the SCI includes one or more of the start time-domain resource position of the reference signal, the number of symbols occupied by the reference signal, the RE offset, and the reference signal pattern. The SCI carries some or all parameters in the reference-signal transmission resource information, so that dynamical adjustment may be achieved, thereby improving the flexibility of transmission.

In the embodiment of FIG. 7, by attempting to receive a reference signal on all or a part of the candidate resources included in the candidate resource set, the probability of missing the reference signal may be reduced.

It should be noted that the terminal device in the embodiment illustrated in FIG. 3 is used to transmit a reference signal, while the terminal device in the embodiment illustrated in FIG. 7 is used to receive a reference signal. The two terminal devices may be the same terminal device, which may both transmit and receive a reference signal; or the two terminal devices may be different terminal devices, one is used to transmit a reference signal and the other one is used to receive a reference signal.

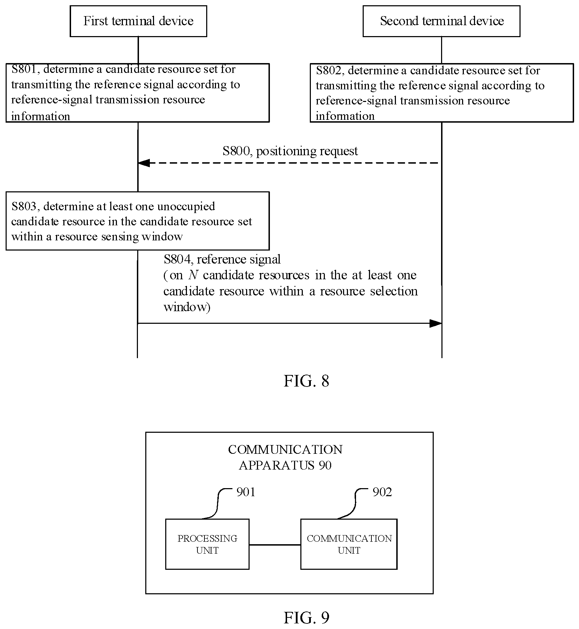

Referring to FIG. 8, FIG. 8 is a schematic diagram of flow of another signal transmission method provided in the embodiments of the present disclosure. The method may include, but is not limited to, the following steps.

S801, a first terminal device determines a candidate resource set for transmitting a reference signal according to reference-signal transmission resource information.

S802, a second terminal device determines a candidate resource set for transmitting a reference signal according to reference-signal transmission resource information.

The order of executing step S801 and step S802 is not limited in the present disclosure.

S803, the first terminal device determines at least one unoccupied candidate resource in the candidate resource set within a resource sensing window.

S804, the first terminal device transmits the reference signal to the second terminal device on N candidate resources in the at least one candidate resource within a resource selection window. Correspondingly, the second terminal device receives the reference signal on all or a part of the candidate resources included in the candidate resource set.

For ease of distinction, in the embodiment illustrated in FIG. 8, the terminal device that transmits a reference signal is referred to as the first terminal device, and the terminal device that receives a reference signal is referred to as the second terminal device. The first terminal device may also be described as a transmitting device, a transmitting end, a transmitting terminal, a first device or a first terminal. Correspondingly, the second terminal device may also be described as a receiving device, a receiving end, a receiving terminal, a second device or a second terminal.

Optionally, the embodiment illustrated in FIG. 8 further includes step S800, in which the second terminal device transmits a positioning request to the first terminal device. Correspondingly, the first terminal device receives a positioning request from the second terminal device. Step S800 may be executed after step S802, and it is not limited whether step S800 is executed before step S802 or before step S804.

FIG. 8 illustrates the signal transmission method method from an interactive perspective. For the parts that are the same or similar to those in the embodiment illustrated in FIG. 3, reference may be made to the description of FIG. 3. For the parts that are the same or similar to those in the embodiment illustrated in FIG. 7, reference may be made to the description of FIG. 7.

Referring to FIG. 9, FIG. 9 is a schematic structure diagram of a communication apparatus provided in the embodiments of the present disclosure. The communication apparatus 90 may be a terminal device, or an apparatus matched with the terminal device. As illustrated in FIG. 9, the communication apparatus 90 includes a processing unit 901 and a communication unit 902.

In one implementation, the processing unit 901 is configured to determine a candidate resource set for transmitting the reference signal according to reference-signal transmission resource information, and determine at least one unoccupied candidate resource in the candidate resource set within a resource sensing window. The communication unit 902 is configured to transmit the reference signal on *N* candidate resources in the at least one candidate resource within the resource selection window, where *N* is a positive integer greater than or equal to 1.

Optionally, the communication unit 902 is further configured to receive a positioning request, where the positioning request is configured to request a sidelink (SL) positioning.

Optionally, the processing unit 901 is further configured to perform a resource sensing on the candidate resource set within a resource sensing window, after the communication unit 902 receives the positioning request.

The processing unit 901 is specifically configured to determine at least one unoccupied candidate resource in the candidate resource set within the resource sensing window according to a resource sensing result for the candidate resource set within the resource sensing window.

Optionally, the communication unit 902 is further configured to determine a resource sensing result for the candidate resource set within the resource sensing window, after receiving the positioning request, where the resource sensing window is located before a time domain resource of the positioning request. The processing unit 901 is specifically configured to determine at least one unoccupied candidate resource in the candidate resource set according to a resource sensing result for the candidate resource set within the resource sensing window.

Optionally, the reference-signal transmission resource information includes at least one of following parameters: a reference signal resource period, a starting frequency domain resource position of a reference signal, a starting time domain resource position of a reference signal, a number of symbols occupied by a reference signal, an RE offset, a reference signal pattern, a reference signal subcarrier spacing, a CP type, and a number of RBs occupied by a reference signal.

Optionally, the communication unit 902 is further configured to transmit SCI, where the SCI comprises a part or all of parameters in the reference-signal transmission resource information.

Optionally, the reference-signal transmission resource information is preconfigured.

Optionally, the parameters in the reference-signal transmission resource information are configured for a carrier channel; or the parameters in the reference-signal transmission resource information are configured for a bandwidth part (BWP); or the parameters in the reference-signal transmission resource information are configured for a resource pool; or some of the parameters in the reference-signal transmission resource information are configured for the carrier channel, some of the parameters are configured for the BWP, and/or some of the parameters are configured for the resource pool.

In another implementation, the processing unit 901 is configured to determine a candidate resource set available for transmitting the reference signal according to reference-signal transmission resource information. The communication unit 902 is configured to receive the reference signal on all or a part of candidate resources included in the candidate resource set.

Optionally, the communication unit 902 is further configured to transmit a positioning request, wherein the positioning request is configured to request an SL positioning.

Optionally, a time-domain resource start receiving position of the reference signal is spaced apart from a time-domain resource end receiving position of the positioning request by a first duration, wherein the first duration is preconfigured.

Optionally, the reference-signal transmission resource information includes at least one of following parameters: a reference signal resource period, a starting frequency domain resource position of a reference signal, a starting time domain resource position of a reference signal, a number of symbols occupied by a reference signal, an RE offset, a reference signal pattern, a reference signal subcarrier spacing, a number of RBs occupied by a reference signal, and a CP type.

Optionally, the reference-signal transmission resource information is preconfigured.

Optionally, the parameters in the reference-signal transmission resource information are configured for a carrier channel; or the parameters in the reference-signal transmission resource information are configured for a BWP; or the parameters in the reference-signal transmission resource information are configured for a resource pool; or some of the parameters in the reference-signal transmission resource information are configured for the carrier channel, some of the parameters are configured for the BWP, and/or some of the parameters are configured for the resource pool.

Optionally, the communication unit 902 is further configured to receive SCI, and the processing unit 901 is further configured to determine a terminal device identifier according to the SCI, where the terminal device identifier is configured to identify a device for transmitting the reference signal.

Optionally, the SCI includes a part or all of the parameters in the reference-signal transmission resource information.

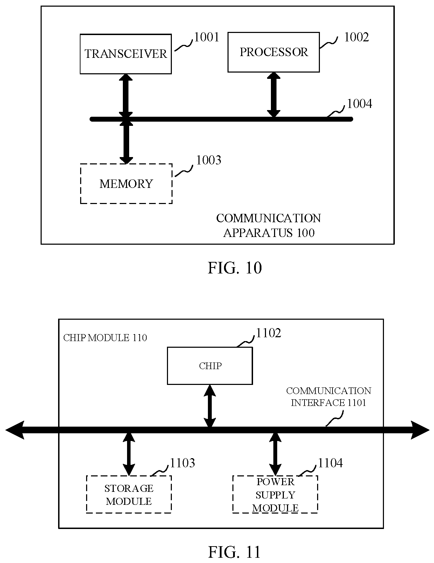

Referring to FIG. 10, FIG. 10 is a schematic diagram of a structure of another communication apparatus provided in the embodiments of the present disclosure. The communication apparatus 100 may be a terminal device, or an apparatus matched with the terminal device. Optionally, the communication apparatus may further include a memory 1003. The transceiver 1001, the processor 1002, and the memory 1003 may be connected via a bus 1004 or connected by other means. The bus is represented by a thick line in FIG. 10, and the connection manners between other components are only for schematic illustration and are not intended for limitation. The bus may be divided into an address bus, a data bus, a control bus, etc. For ease of representation, in FIG. 10, the bus is represented by only one thick line, but this does not mean that there is only one bus or one type of bus.

The coupling in the embodiments of the present disclosure is an indirect coupling or communication connection between apparatuses, units or modules, may be in an electrical form, a mechanical form or in other forms, and is used for information interaction between apparatuses, units or modules. The specific connection media among the transceiver 1001, the processor 1002, and the memory 1003 are not limited in the embodiments of the present disclosure.

The memory 1003 may include a read-only memory and a random access memory, and provides instructions and data to the processor 1002. A part of the memory 1003 may also include a non-volatile random access memory.

The processor 1002 may be a central processing unit (CPU), or the processor 1002 may be another general-purpose processor, a digital signal processor (DSP), an application specific integrated circuit (ASIC), a field-programmable gate array (FPGA), or another programmable logic device, a discrete gate or a transistor logic device, or a discrete hardware assembly. The general-purpose processor may be a microprocessor. Alternatively, the processor 1002 may be any conventional processor.

In one optional implementation, the memory 1003 is configured to store program instructions; the processor 1002 is configured to invoke the program instructions stored in the memory 1003 to execute the steps performed by the terminal device in the corresponding embodiments of FIG. 3 or FIG. 7.

In the embodiments of the present disclosure, a computer program (including a program code) operable to execute the steps involved in the above method may be run on a general computing apparatus such as a computer including processing units and storage units, for example, a CPU, a random access memory (RAM), and a read-only memory (ROM), and so that the method provided in the embodiments of the present disclosure may be implemented. The computer program may be recorded on, for example, a computer-readable recording medium, and loaded into the above computing apparatus through the computer-readable recording medium to be executed therein.

Based on the same inventive concept, the principles and beneficial effects of solving the problems provided in the communication apparatus 100 in the embodiments of the present disclosure are similar to the principles and beneficial effects of solving the problems in the embodiments illustrated in FIG. 3 or FIG. 7 of the present disclosure. The principles and beneficial effects of the implementation of the method may be referred to. For the sake of concise description, they will not be repeated here.

The foregoing communication apparatus may be, for example, a chip or a chip module.

The embodiments of the present disclosure further provide a chip. The chip includes a processor, and the processor may execute the relevant steps of the terminal device in the foregoing method embodiments.

In one implementation, the chip is configured to determine a candidate resource set for transmitting the reference signal according to reference-signal transmission resource information, determine at least one unoccupied candidate resource in the candidate resource set within a resource sensing window, and transmit the reference signal on N candidate resources in the at least one candidate resource within the resource selection window, wherein N is a positive integer greater than or equal to 1.

In another implementation, the chip is configured to determine a candidate resource set available for transmitting the reference signal according to the reference-signal transmission resource information, and receive the reference signal on all or a part of the candidate resources included in the candidate resource set.

Referring to FIG. 11, FIG. 11 is a schematic diagram of a structure of a chip module provided in the embodiments of the present disclosure. The chip module 110 is configured to execute the relevant steps of the terminal device in the forgoing method embodiments. The chip module 110 includes a communication interface 1101 and a chip 1102.

The communication interface is used for an internal communication of the chip module, or a communication of the chip module with an external device. The chip is configured to implement the functions of the terminal device in the embodiments of the present disclosure.

For example, the chip 1102 is configured to determine a candidate resource set for transmitting the reference signal according to reference-signal transmission resource information, and determine at least one unoccupied candidate resource in the candidate resource set within a resource sensing window. The communication interface 1101 is configured to transmit the reference signal on N candidate resources in the at least one candidate resource within the resource selection window, where N is a positive integer greater than or equal to 1.

For another example, the chip 1102 is configured to determine a candidate resource set available for transmitting the reference signal according to the reference-signal transmission resource information, and the communication interface 1101 is configured receive the reference signal on all or a part of the candidate resources included in the candidate resource set.

Optionally, the chip module 110 may further include a storage module 1103 and a power supply module 1104. The storage module 1103 is configured to store data and instructions. The power module 1104 is configured to provide electric energy to the chip module.

Various modules included in various apparatuses or products applied to or integrated in the chip module may be all embodied as hardware such as circuits. Different modules may be located in the same assembly (such as a chip and a circuit module) or in different assemblies of the chip module. Alternatively, at least some of the modules may be embodied as software programs that run on a processor integrated inside the chip module, and the remaining modules (if any) may be embodied as hardware such as circuits.

The embodiments of the present disclosure further provide a computer-readable storage medium having one or more instructions stored therein. The one or more instructions are applicable for being loaded by a processor and implementing the method provided in the above method embodiments.

The embodiments of the present disclosure further provide a computer program product including a computer program or instructions. When executed on a computer, the computer program or instructions cause the computer to implement the method provided in the above method embodiments.

It should be noted that, for the sake of simplicity of description, various embodiments above are all expressed as a series of action combinations. Those skilled in the art should be aware that the present disclosure is not limited by the order of actions described, because some steps in the embodiments of the present disclosure may be performed in other orders or performed simultaneously. In addition, those skilled in the art should also be aware that the embodiments described in the specification are all preferred embodiments, and the actions, steps, modules or units involved are not necessarily required for the embodiments of the present disclosure.

In the above embodiments, the embodiments of the present disclosure have different focuses on the description of each embodiment. For parts that are not described in detail in a certain embodiment, the relevant descriptions of other embodiments may be referred to.

The steps of the method or algorithm described in the embodiments of the present disclosure may be implemented in a manner of hardware or in a manner that a processor is configured to execute software instructions. The software instructions may be composed of corresponding software modules, and the software modules may be stored in a random access memory (RAM), a flash memory, a read-only memory (ROM), an erasable programmable ROM (EPROM), an electrically EPROM (EEPROM), a register, a hard disk, a mobile hard disk, a compact disc read-only memory (CD-ROM) or a storage medium in any other form known in the art. An exemplary storage medium is coupled to the processor, so that the processor may read information from, and write information to, the storage medium. Of course, the storage medium may also be a constituent part of the processor. The processor and the storage medium may be located in an application-specific integrated circuit (ASIC). In addition, the ASIC may be located in a terminal device or a management device. Of course, the processor and the storage medium may also exist as discrete assemblies in the terminal device or the management device.

Those skilled in the art should be aware that in one or more of the above examples, the functions described in the embodiments of the present disclosure may be implemented in whole or in part by software, hardware, firmware, or any combination thereof. When the functions are implemented by software, the software may be in whole or in part embodied in form of a computer program product. The computer program product includes one or more computer instructions. When the computer program instructions are loaded and executed on a computer, the flows or functions described in the embodiments of the present disclosure will be generated in whole or in part. The computer may be a general purpose computer, a special purpose computer, a computer network, or another programmable apparatus. The computer instruction may be stored in a computer-readable storage medium or transferred from one computer-readable storage medium to another computer-readable storage medium. For example, the computer instructions may be transmitted from one website site, computer, server or data center to another website site, computer, server or data center in a wired (e.g., a coaxial cable, an optical fiber, and a digital subscriber line (DSL)) manner or in a wireless (e.g., infrared, radio, and microwave) manner. The computer-readable storage medium may be any available medium accessible by a computer or a data storage device, such as a server or a data center, which includes one or more available media integrations. The available medium may be a magnetic medium (e.g., a floppy disk, a hard disk, and a magnetic tape), an optical medium (e.g., a digital video disc (DVD)), or a semiconductor medium (e.g., a solid state disk (SSD)).

Various modules/units included in various apparatuses and products described in the above embodiments may be software modules/units or hardware modules/units, or some of the modules/units may be software module/units and some of the modules/units may be hardware module/units. For example, various modules/units included in various apparatuses and products applied to or integrated in a chip may be all embodied in form of hardware such as circuits, or at least some modules/units all be implemented in form of hardware such as circuits, or at least some of the modules/units may be embodied in form of software programs running on a processor integrated in the chip, and the remaining modules/units (if any) may be embodied in form of hardware such as circuits. Various modules/units included in various apparatuses and products applied to or integrated in a chip module may be all embodied in form of hardware such as circuits, different modules/units may be located in the same assembly of the chip module (such as a chip and a circuit module) or in different assemblies, or at least some of the modules/units may be embodied in form of software programs running on a processor integrated in the chip module, and the remaining modules/units (if any) may be embodied in form of hardware such as circuits. Various modules/units included in various apparatuses and products applied to or integrated in a terminal may be all embodied in form of hardware such as circuits, different modules/units may be located in the same assembly of the terminal (such as a chip and a circuit module) or in different assemblies, or at least some of the modules/units may be embodied in form of software programs running on a processor integrated in the terminal, and the remaining modules/units (if any) may be embodied in form of hardware such as circuits.

The specific implementations described above further illustrate the purpose, technical solutions and beneficial effects of the embodiments of the present disclosure. It may be understood that the above descriptions are only specific implementations of the embodiments of the present disclosure and are not intended to limit the protection scope of the embodiments of the present disclosure. Any modifications, equivalent substitutions, improvements, etc. made on the basis of the technical solutions of the embodiments of the present disclosure should be included in the protection scope of the embodiments of the present disclosure.

## Claims

1. A signal transmission method, comprising:
determining a candidate resource set for transmitting the reference signal according to reference-signal transmission resource information;
determining at least one unoccupied candidate resource in the candidate resource set within a resource sensing window; and
transmitting the reference signal on N candidate resources in the at least one candidate resource within the resource selection window, wherein *N* is a positive integer greater than or equal to 1.

2. The method according to claim 1, further comprising:
receiving a positioning request, wherein the positioning request is used to request a sidelink (SL) positioning.

3. The method according to claim 2, further comprising:
performing resource sensing on the candidate resource set within a resource sensing window, after receiving the positioning request; wherein
determining at least one unoccupied candidate resource in the candidate resource set within the resource sensing window comprises:
determining at least one unoccupied candidate resource in the candidate resource set according to a resource sensing result for the candidate resource set within the resource sensing window.

4. The method according to claim 2, further comprising:
determining a resource sensing result for the candidate resource set within the resource sensing window, after receiving the positioning request, wherein the resource sensing window is located before a time domain resource of the positioning request; wherein
determining at least one unoccupied candidate resource in the candidate resource set within the resource sensing window comprises:
determining at least one unoccupied candidate resource in the candidate resource set according to a resource sensing result for the candidate resource set within the resource sensing window.

5. The method according to claim 1, wherein the reference-signal transmission resource information comprises at least one of following parameters:
a reference signal resource period, a starting frequency domain resource position of a reference signal, a starting time domain resource position of a reference signal, a number of symbols occupied by a reference signal, a resource element (RE) offset, a reference signal pattern, a reference signal subcarrier spacing, a cyclic prefix (CP) type, and a number of resource blocks (RBs) occupied by a reference signal.

6. The method according to claim 5, further comprising:
transmitting sidelink control information (SCI), wherein the SCI comprises a part or all of parameters in the reference-signal transmission resource information.

7. The method according to claim 5, wherein the reference-signal transmission resource information is preconfigured.

8. The method according to any one of claims 5 to 7, wherein
the parameters in the reference-signal transmission resource information are configured for a carrier channel; or
the parameters in the reference-signal transmission resource information are configured for a bandwidth part (BWP); or
the parameters in the reference-signal transmission resource information are configured for a resource pool; or
some of the parameters in the reference-signal transmission resource information are configured for the carrier channel, some of the parameters are configured for the BWP, and/or some of the parameters are configured for the resource pool.

9. A signal transmission method, comprising:
determining a candidate resource set available for transmitting the reference signal according to reference-signal transmission resource information; and
receiving the reference signal on all or a part of candidate resources in the candidate resource set.

10. The method according to claim 9, further comprising:
transmitting a positioning request, wherein the positioning request is used to request an SL positioning.

11. The method according to claim 10, wherein a time-domain resource start receiving position of the reference signal is spaced apart from a time-domain resource end receiving position of the positioning request by a first duration, wherein the first duration is preconfigured.

12. The method according to claim 9, wherein the reference-signal transmission resource information comprises at least one of following parameters:
a reference signal resource period, a starting frequency domain resource position of a reference signal, a starting time domain resource position of a reference signal, a number of symbols occupied by a reference signal, a resource element (RE) offset, a reference signal pattern, a reference signal subcarrier spacing, a number of resource blocks (RBs) occupied by a reference signal, and a cyclic prefix (CP) type.

13. The method according to claim 12, wherein the reference-signal transmission resource information is preconfigured.

14. The method according to claim 12 or 13, wherein
the parameters in the reference-signal transmission resource information are configured for a carrier channel; or
the parameters in the reference-signal transmission resource information are configured for a BWP; or
the parameters in the reference-signal transmission resource information are configured for a resource pool; or
some of the parameters in the reference-signal transmission resource information are configured for the carrier channel, some of the parameters are configured for the BWP, and/or some of the parameters are configured for the resource pool.

15. The method according to claim 12, further comprising:
receiving sidelink control information (SCI); and
determining a terminal device identifier according to the SCI, wherein the terminal device identifier is configured to identify a device for transmitting the reference signal.

16. The method according to claim 15, wherein the SCI comprises a part or all of the parameters in the reference-signal transmission resource information.

17. A communication apparatus, comprising a processor, a memory, and a computer program or instruction stored in the memory, wherein the processor is configured to execute the computer program or instruction to execute steps of the method according to any one of claims 1 to 8, or execute steps of the method according to any one of claims 9 to 16.

18. A chip, comprising a processor, wherein the processor is configured to execute steps of the method according to any one of claims 1 to 8, or execute steps of the method according to any one of claims 9 to 16.

19. A module device, comprising: a communication module, a power supply module, a storage module and a chip module, wherein the power supply module is configured to provide electric energy for the module device; the storage module is configured to store data and instructions; the communication module is configured for internal communication of the module device, or configured for communication between the module device and an external device; and the chip module is configured to execute steps of the method according to any one of claims 1-8; or execute steps of the method according to any one of claims 9 to 16.

20. A computer-readable storage medium, having a computer program or instruction stored thereon, wherein the computer program or instruction, when executed by a computer, implements steps of the method according to any one of claims 1 to 8; or execute steps of the method according to any one of claims 9 to 16.
